# EUROPÄISCHE PATENTSCHRIFT

(11) **EP 0 811 779 B1**
(45) Veröffentlichungstag und Bekanntmachung des Hinweises auf die Patenterteilung: **13.09.2000**
(21) Anmeldenummer: 97890094.2
(22) Anmeldetag: 22.05.1997
(51) Int. Cl.: F16D 23/06

(54) **Vorrichtung zum Zusammenbau einer Synchronisiereinrichtung für ein Zahnradwechselgetriebe**
Process for assembling a synchronizer for a gear change box
Dispositif d'assemblage d'un mécanisme de synchronisation pour une boîte de vitesses

(30) Priorität: 05.06.1996 AT 97196
(43) Veröffentlichungstag der Anmeldung: 10.12.1997
(73) Patentinhaber: Miba Sintermetall Aktiengesellschaft, 4663 Laakirchen (AT)
(72) Erfinder: Sonntag, Konrad, 4810 Gmunden (AT); Zauner, Josef, 4643 Pettenbach (AT); Sandner, Christian, Dipl.-Ing., 4810 Gmunden (AT)
(74) Vertreter: Hübscher, Helmut, Dipl.-Ing.

(56) Entgegenhaltungen:
- EP-A- 0 389 324
- AT-B- 400 615

## Beschreibung

Die Erfindung bezieht sich auf eine Vorrichtung zum Zusammenbau einer Synchronisiereinrichtung für ein Zahnradwechselgetriebe, die eine Nabe mit einer Schiebemuffe und wenigstens eine Konuskupplung mit einem gegenüber der Nabe frei drehbaren Doppelkonusring zwischen einem inneren, mit der Nabe verbindbaren Reibring und einem äußeren, gegenüber dem Reibring durch die Schiebemuffe axial verschiebbaren Synchronring aufweist, wobei gegenüber der Nabe axial festgelegte, über deren Umfang verteilte Montageanschläge für den äußeren Synchronring und ein Montagestempel zur axialen Beaufschlagung des inneren Reibringes der Konuskupplung vorgesehen sind.

Um bei Zahnradwechselgetrieben mit einer drehfest auf einer Welle sitzenden Nabe und einem auf der Welle frei drehbar gelagerten Zahnrad die Nabe mit dem Zahnrad über eine Klauenkupplung störungsfrei verbinden zu können, die durch eine auf der Nabe axial verstellbare und auf einen zahnradseitigen Klauenkranz aufschiebbare Schiebemuffe gebildet wird, muß das Zahnrad die Umlaufgeschwindigkeit der Nabe annehmen. Dies wird durch eine zwischen der Nabe und dem Zahnrad vorgesehene Konuskupplung erreicht, die einen eine Drehmitnahme des Zahnrades bewirkenden Doppelkonusring aufweist, der zwischen einem inneren, drehfest mit der Nabe verbundenen Reibring und einem durch die Schiebemuffe gegenüber diesem Reibring axial verstellbaren Synchronring kraftschlüssig einspannbar ist. Wird die Schiebemuffe auf der Nabe im Sinne eines Kupplungseingriffes verschoben, so wird durch die axiale Mitnahme des Synchronringes der Doppelkonusring reibschlüssig zwischen dem inneren Reibring und dem äußeren Synchronring und damit das mit dem Synchronring drehfest verbundene Zahnrad auf die Umlaufgeschwindigkeit der Nabe beschleunigt, was den anschließenden, unbehinderten Kupplungseingriff zwischen der Schiebemuffe und dem Klauenkranz des Zahnrades ermöglicht. Voraussetzung für eine möglichst totgangfreie Betätigung der Konuskupplung über die Schiebemuffe ist, daß das für den Freilauf des Doppelkonusringes erforderliche axiale Spiel möglichst klein gehalten wird. Zu diesem Zweck ist es bekannt (AT 400 615 B), dieses axiale Spiel durch nabenseitige Montageanschläge für den Synchronring festzulegen. Unter der Bedingung, daß der Synchronring, der Doppelkonusring und der innere Reibring spielfrei ineinandergreifen, kann somit in der Anschlagstellung des Synchronringes die axiale Lage des inneren Reibringes für das durch diesen Montageanschlag bestimmte Spiel auf der Nabe festgelegt werden. Allerdings müssen die beim Zusammenbau der Synchronisiereinrichtung auftretenden axialen Reibungskräfte und das elastische Biegeverhalten der einzelnen Teile der Konuskupplung in axialer Richtung bei der axialen Festlegung des inneren Reibringes auf der Nabe berücksichtigt werden. Aus diesem Grunde wird die Konuskupplung mit einer vorgegebenen Axialkraft über einen Montagestempel unter Vorspannung an die nabenseitigen Montageanschläge angedrückt, wobei durch die im wesentlichen reibungsfreie Verschiebbarkeit des inneren Reibringes auf der Nabe sichergestellt wird, daß die auf die Konuskupplung einwirkende Vorspannung tatsächlich allein durch die aufgebrachte Axialkraft bestimmt und nicht durch axiale Reibungskräfte zwischen dem inneren Reibring und der Nabe beeinflußt wird, wie dies beispielsweise beim Aufpressen des inneren Reibringes auf die Nabe der Fall wäre. Zur axialen Festlegung des Reibringes auf der Nabe dient vorteilhaft ein Befestigungsring, der mit radialem Spiel warm auf die Nabe aufgesetzt und zur Bildung eines Schrumpfsitzes abgekühlt wird. Über diesen Befestigungsring kann daher auch der Montagestempel auf den inneren Reibring drücken, bis der warme Befestigungsring für einen entsprechenden Schrumpfsitz ausreichend erkaltet ist.

Die Vorspannung der Konuskupplung bei der Montage der Synchronisiereinrichtung bietet außerdem die Möglichkeit einer Montageüberprüfung, wenn der Synchronring nach der axialen Festlegung des inneren Reibringes auf der Nabe noch vor dem Entfernen des Montageanschlages bei aufgehobener äußerer Axialkraft gedreht und das für die Drehung erforderliche Drehmoment als Maß für die tatsächliche Vorspannung der Konuskupplung bestimmt wird. Obwohl mit Hilfe dieses bekannten Montageverfahrens sehr enge Toleranzbereiche auch unter Bedingungen einer Serienfertigung eingehalten werden können, hängt die einfache Durchführbarkeit dieses Verfahrens davon ab, ob die axiale Vorspannung der Konuskupplung über den Befestigungsring ohne ins Gewicht fallende Reibungskräfte zwischen der Nabe und dem Befestigungsring aufgebracht werden kann, was beispielsweise einen Preßsitz des Befestigungsringes auf der Nabe ausschließt.

Der Erfindung liegt somit die Aufgabe zugrunde, eine Vorrichtung zum Zusammenbau einer Synchronisiereinrichtung für ein Zahnradwechselgetriebe der eingangs geschilderten Art so auszubilden, daß die Konuskupplung für die Montage mit einer vorgegebenen Vorspannung unabhängig von allenfalls durch den Montagestempel zusätzlich zu überwindenden Reibungskräften beaufschlagt werden kann.

Die Erfindung löst die gestellte Aufgabe dadurch, daß zwischen dem äußeren Synchronring der Konuskupplung und wenigstens einem der Montageanschläge eine die Beaufschlagung des Montagestempels steuernde Kraftmeßeinrichtung vorgesehen ist.
Durch diese Kraftmeßeinrichtung, vorzugsweise eine Kraftmeßdose, wird die unmittelbare axiale Belastung des äußeren Synchronringes der Konuskupplung unabhängig von der über den Montagestempel aufgebrachten Axialkraft gemessen, so daß über diese Kraftmeßeinrichtung die Beaufschlagung des Montagestempels zur Sicherstellung einer vorgegebenen axialen Vorspannung der Konuskupplung gesteuert werden kann, und zwar auch dann, wenn die axiale Festlegung des inneren Reibringes gegenüber der Nabe durch einen mittels eines Preßsitzes auf die Nabe aufgeschobenen Befestigungsringes erfolgt, dessen Montage selbstverständlich eine größere, von der Reibung zwischen dem Befestigungsring und der Nabe abhängige Stempelkraft als für die bloße Vorspannung der Konuskupplung erfordert. Die Befestigung des Reibringes auf der Nabe mittels eines aufgepreßten Befestigungsringes kann daher zugleich mit der Aufbringung der für das Einhalten eines geringen Freilaufspieles notwendigen - Vorspannung der Konuskupplung erfolgen, was besonders einfache Montageverhältnisse sichert. Es können aber auch andere Befestigungsarten für den Reibring der Konuskupplung vorgesehen werden. Unabhängig von der jeweils gewählten Befestigungsart kann über die Kraftmeßeinrichtung die ordnungsgemäße Montage einfach überwacht werden, weil ja nach der Montage vor dem Entfernen der Montageanschläge bei abgehobenem Montagestempel eine bestimmte Vorspannung der Konuskupplung vorliegen muß.

Wegen der Größe üblicher Kraftmeßdosen ist es im allgemeinen schwierig, den äußeren Synchronring unmittelbar an der Kraftmeßdose abzustützen. Zur Vermeidung dieser Schwierigkeit kann der mit der Kraftmeßeinrichtung versehene Montageanschlag einen an der Kraftmeßeinrichtung abgestützten Stützhebel für den Synchronring tragen. Die Kraftmeßeinrichtung wird in diesem Fall über den Stützhebel beaufschlagt, der nicht nur ausreichenden Einbauraum für die Kraftmeßeinrichtung schafft, sondern den zusätzlichen Vorteil einer entsprechenden Kraftübersetzung mit sich bringt. Damit die Kraftmeßeinrichtung vor einer Überlastung gesichert werden kann, ohne die Messungen zu beeinträchtigen, kann in weiterer Ausbildung der Erfindung der Stützhebel doppelarmig ausgebildet werden und über eine zur Belastung durch den Synchronring gegensinnige Federvorspannung die Kraftmeßeinrichtung beaufschlagen. Durch diese Maßnahme wird die Kraftmeßeinrichtung mit einer zulässigen Maximalkraft durch die Federvorspannung belastet und mit zunehmender Vorspannung der Konuskupplung entlastet, weil ja die axiale Kupplungsbelastung gegensinnig zur Federvorspannung des Stützhebels wirkt.

Kann von einer gleichmäßigen Belastung aller Montageanschläge ausgegangen werden, so kann mit einer Kraftmeßeinrichtung im Bereich eines einzigen Montageanschlages das Auslangen gefunden werden. Mit Kraftmeßeinrichtungen bei wenigstens zwei der Montageanschläge kann nicht nur die koaxiale Anordnung der Konuskupplung gegenüber der Nabe, sondern auch die Konuskupplung auf Bauteilfehler überwacht werden.

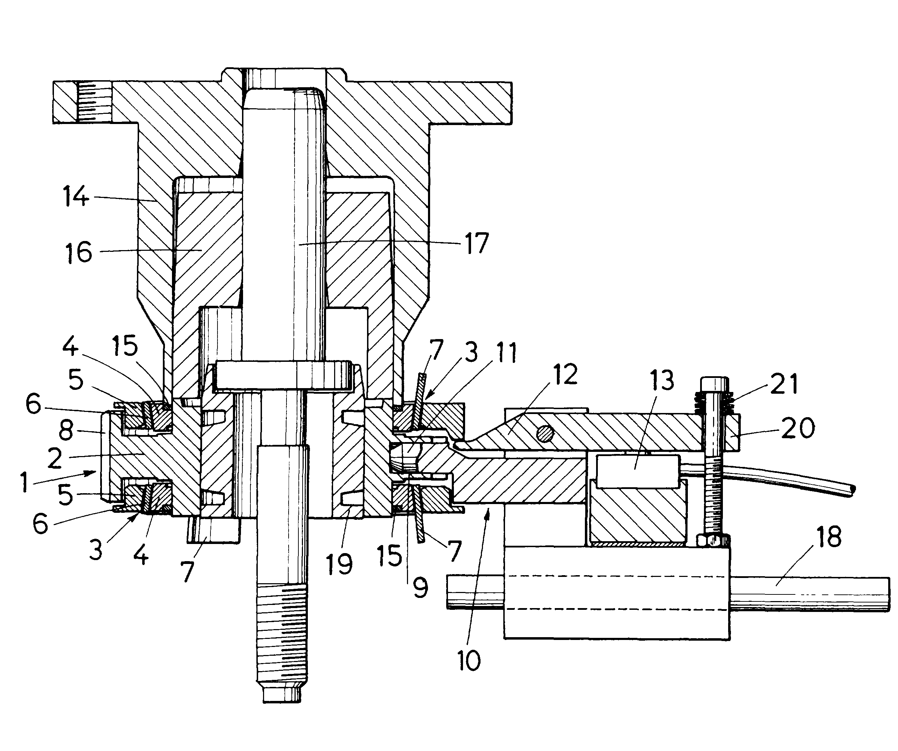

In der Zeichnung ist der Erfindungsgegenstand beispielsweise dargestellt, und zwar wird eine erfindungsgemäße Vorrichtung zum Zusammenbau einer Synchronisiereinrichtung für ein Zahnradwechselgetriebe in einem vereinfachten Axialschnitt gezeigt.

Die dargestellte Synchronisiereinrichtung 1 ist mit zwei beidseitig ihrer Nabe 2 angeordneten Konuskupplungen 3 versehen, die jeweils aus einem inneren Reibring 4, einem äußeren Synchronring 5 und einem Doppelkonusring 6 zwischen dem Reibring 4 und dem Synchronring 5 aufgebaut sind. Während der innere Reibring 4 und der äußere Synchronring 5 der Nabe 2 zugeordnet sind, weist der Doppelkonusring 6 axial vorragende Mitnehmer 7 für ein Zahnrad eines Zahnradwechselgetriebes auf. Dieses Zahnrad kann mit der Nabe 2 über eine schaltbare Klauenkupplung verbunden werden, die aus einer auf der Nabe 2 axial verstellbaren Schiebemuffe und einem dem Zahnrad zugeordneten Klauenkranz zur Aufnahme der Schiebemuffe besteht. Die Schiebemuffe, die im allgemeinen über eine Schaltgabel verstellt wird, ist auf einem von der Nabe 2 gebildeten Klauenkranz 8 gelagert und kann mittels einer Federrast diesem gegenüber axial festgelegt werden. Zu diesem Zweck können in über den Umfang des Klauenkranzes 8 verteilten, radialen Bohrungen 9 federbelastete Kugelrasten gelagert werden, die mit entsprechenden Gegenrasten der Schiebemuffe zusammenwirken.

Um die Schiebemuffe auf den Klauenkranz des jeweils anzutreibenden Zahnrades des Zahnradwechselgetriebes störungsfrei aufschieben zu können, muß für eine übereinstimmende Umlaufgeschwindigkeit der Schiebemuffe und des anzutreibenden Zahnrades gesorgt werden. Der hiefür erforderliche Antrieb des Zahnrades erfolgt über die zugehörige Konuskupplung 3, deren Synchronring 5 bei einer axialen Verstellung der Schiebemuffe mitgenommen wird, so daß der Doppelkonusring 6 zwischen dem mit der Nabe 2 mitgedrehten inneren Reibring 4 und dem Synchronring 5 reibschlüssig eingespannt und auf die Umlaufgeschwindigkeit der Nabe 2 beschleunigt wird. Voraussetzung hiefür ist, daß der innere Reibring 4 auf der Nabe 2 axial so festgelegt wird, daß sich für den Synchronring 5 nur ein eng begrenzter Verstellweg von beispielsweise < 0,1 mm ergibt.

Um einen solchen geringen Totgang der Konuskupplung 3 beim Zusammenbau der Synchronisiereinrichtung 1 zu gewährleisten, werden dieses Spiel bestimmende Montageanschläge 10 nabenseitig vorgesehen, an die der Synchronring 5 der Konuskupplung 3 durch eine auf den inneren Reibring 4 einwirkende Axialkraft angedrückt wird. Diese Axialkraft bedingt eine alle Spiele ausgleichende Vorspannung der Konuskupplung 3, so daß die axiale Lage des inneren Reibringes 4 auf der Nabe 2 für das einzustellende axiale Spiel des Synchronringes 5 mit großer Genauigkeit bestimmt werden kann, wenn dafür gesorgt ist, daß die Konuskupplung 3 mit einer vorgegebenen Axialkraft belastet wird. Zu diesem Zweck bilden die über den Umfang der Nabe 2 verteilt angeordneten Montageanschläge 10, von denen nur einer aus Übersichtlichkeitsgründen dargestellt ist, einen in die Bohrungen 9 der Nabe 2 einführbaren Steckansatz 11 und ein Lager für einen Stützhebel 12, der an einer Kraftmeßeinrichtung 13, vorzugsweise eine Kraftmeßdose, abgestützt ist und an den sich der Synchronring 5 anlegt, so daß die durch einen hülsenartigen Montagestempel 14 aufgebrachte axiale Vorspannung der Konuskupplung 3 über die Kraftmeßeinrichtung 13 genau bestimmt werden kann. Die Beaufschlagung des Montagestempels 14 kann somit über die Kraftmeßeinrichtung 13 so gesteuert werden, daß eine vorgegebene axiale Vorspannung der Konuskupplung 3 genau eingehalten wird. Bei dieser Vorspannung der Konuskupplung 3 kann der innere Reibring 4 gegenüber der Nabe 2 festgelegt werden. Im dargestellten Ausführungsbeispiel dient hiefür ein Befestigungsring 15, der mit Hilfe des Montagestempels 14 über einen Hilfskegel 16 auf die Nabe 2 aufgepreßt wird, so daß durch den Preßsitz des Befestigungsringes 15 auf der Nabe 2 die axiale Festlegung des Reibringes 4 gesichert ist. Die für das Aufpressen des Befestigungsringes 15 auf die Nabe 2 erforderliche, die Axialkraft für die Vorspannung der Konuskupplung 3 übersteigende axiale Preßkraft wird dabei durch die Kraftmeßeinrichtung 13 nicht erfaßt. Wird nach einer solchen axialen Festlegung des inneren Reibinges 4 der Konuskupplung der Montagestempel 14 von der Konuskupplung 3 abgehoben, so kann über die verbleibende Vorspannung der ordnungsgemäße Sitz des Befestigungsringes 15 überprüft und allenfalls auftretende Bauteilfehler erkannt werden, wenn die nach dem Abheben des Montagestempels 14 gemessene Vorspannung der Konuskupplung 3 einen vorgegebenen Wert unterschreitet.

Die Montageanschläge 10 sind auf gegenüber einem axialen Führungsbolzen 17 radial angeordneten Führungen 18 radial verstellbar gelagert, um die Steckansätze 11 in die Bohrungen 9 der Nabe 2 einführen zu können, die somit über die Steckansätze 11 axial gehalten wird. Die Zentrierung der Nabe 2 erfolgt über den Führungsbolzen 17 und eine zum Führungsbolzen 17 koaxiale Führungshülse 19. Über die Führungen 18 wird daher die axiale Belastung der Nabe 2 durch den Montagestempel 14 abgetragen.

Um eine Überlastung der Kraftmeßeinrichtungen 13 der einzelnen Montageanschläge zu verhindern, ist jeweils der Stützhebel 12 als doppelarmiger Hebel ausgebildet, der sich mit seinem vom Synchronring 5 abgekehrten Hebelarm 20 an einer Druckfeder 21 abstützt, die den Stützhebel 12 entgegen der Beaufschlagung durch den Montagestempel 14 belastet, so daß die Kraftmeßeinrichtung 13 durch die Feder 21 beaufschlagt und über den Montagestempel 14 entgegen der Kraft der Feder 21 entlastet wird. Das Maß der Entlastung entspricht der Vorspannung der Konuskupplung 3. Aufgrund dieser Anordnung ist eine Überlastung der Kraftmeßeinrichtung 13 durch die Beaufschlagung des Montagestempels 14 ausgeschlossen. Die Feder 21 bestimmt ja die maximale Belastung der Kraftmeßeinrichtung 13.

Die axiale Festlegung des inneren Reibringes 4 der Konuskupplung 3 auf der Nabe 2 braucht nicht über den dargestellten Befestigungsring 15 zu erfolgen. Es könnte hiefür beispielsweise auch eine auf die Nabe aufschraubbare Befestigungsmutter vorgesehen sein. Die axiale Vorspannung der Konuskupplung 3 für das Einhalten eines vorgegebenen axialen Spiels des Synchronringes 5 kann unabhängig von der axialen Festlegung des Reibringes 4 stets über die Kraftmeßeinrichtung 13 sichergestellt werden.

## Patentansprüche

1. Vorrichtung zum Zusammenbau einer Synchronisiereinrichtung (1) für ein Zahnradwechselgetriebe, die eine Nabe (2) mit einer Schiebemuffe und wenigstens eine Konuskupplung (3) mit einem gegenüber der Nabe (2) frei drehbaren Doppelkonusring (6) zwischen einem inneren, mit der Nabe (2) verbindbaren Reibring (4) und einem äußeren, gegenüber dem Reibring (4) durch die Schiebemuffe axial verschiebbaren Synchronring (5) aufweist, wobei gegenüber der Nabe (2) axial festgelegte, über deren Umfang verteilte Montageanschläge (10) für den äußeren Synchronring (5) und ein Montagestempel (14) zur axialen Beaufschlagung des inneren Reibringes (4) der Konuskupplung (3) vorgesehen sind, dadurch gekennzeichnet, daß zwischen dem äußeren Synchronring (5) der Konuskupplung (3) und wenigstens einem der Montageanschläge (10) eine die Beaufschlagung des Montagestempels (14) steuernde Kraftmeßeinrichtung (13) vorgesehen ist.

2. Vorrichtung nach Anspruch 1, dadurch gekennzeichnet, daß der mit der Kraftmeßeinrichtung (13) versehene Montageanschlag (10) ein Lager für einen an der Kraftmeßeinrichtung (13) abgestützten Stützhebel (12) für den Synchronring (5) trägt.

3. Vorrichtung nach Anspruch 2, dadurch gekennzeichnet, daß der Stützhebel (12) doppelarmig ausgebildet ist und über eine zur Belastung durch den Synchronring (5) gegensinnige Federvorspannung die Kraftmeßeinrichtung (13) beaufschlagt.

4. Vorrichtung nach einem der Ansprüche 1 bis 3, dadurch gekennzeichnet, daß wenigstens zwei der Montageanschläge (10) eine Kraftmeßeinrichtung (13) aufweisen.

## Claims

1. Apparatus for the assembly of a synchroniser (1) for a change-speed gearbox, comprising a hub (2) with a sliding sleeve and at least one conical coupling (3) having a double conical ring (6) freely rotatable with respect to the hub (2) between an inner friction ring (4) connectable to the hub (2) and an outer synchronising ring (5) axially displaceable with respect to the friction ring (4) by means of the sliding sleeve, assembly stops (10) being provided for the outer synchronising ring (5), said stops (10) being axially fixed with respect to the hub (2) and being distributed over the periphery thereof, and an assembly punch (14) for axially loading the inner friction ring (4) of the conical coupling (3), characterised in that a force measuring device (13) which controls the loading on the assembly punch (14) is provided between the outer synchronising ring (5) of the conical coupling (3) and at least one of the assembly stops (10) .

2. Apparatus according to claim 1, characterised in that the assembly stop (10) provided with the force measuring device (13) carries a bearing for a support lever (12) for the synchronising ring (5), said support lever (12) being supported on the force measuring device (13).

3. Apparatus according to claim 2, characterised in that the support lever (12) is a two-armed lever and loads the force measuring device (13) by way of spring biasing which is in opposition to the loading by the synchronising ring (5).

4. Apparatus according to any one of claims 1 to 3, characterised in that at least two of the assembly stops (10) have a force measuring device (13).

## Revendications

1. Dispositif d'assemblage d'un mécanisme de synchronisation (1) pour une boîte de vitesses à engrenages, présentant un moyeu (2) avec un manchon coulissant et au moins un embrayage à cône (3) avec un anneau à cône double (6), susceptible de tourner librement par rapport au moyeu (2), installé entre un anneau de frottement intérieur (4), susceptible d'être relié au moyeu (2), et un anneau de synchronisation extérieur (5), déplaçable axialement par rapport à l'anneau de frottement (4) au moyen du manchon coulissant, des butées de montage (10), fixées axialement par rapport au moyeu (2), réparties sur sa périphérie, étant prévues pour l'anneau de synchronisation extérieur (5), et un poinçon de montage (14) étant prévu pour solliciter axialement l'anneau de frottement intérieur (4) de l'embrayage à cône (3), caractérisé par le fait qu'entre l'anneau de synchronisation extérieur (5) de l'embrayage à cône (3) et au moins l'une des butées de montage (10) est prévu un dispositif de mesure de force (13), commandant la sollicitation exercée par le poinçon de montage (14).

2. Dispositif selon la revendication 1, caractérisé par le fait que la butée de montage (10) dotée du dispositif de mesure de force (13) porte un palier, pour un levier d'appui (12), prenant appui sur le dispositif de mesure (13), pour l'anneau de synchronisation (5).

3. Dispositif selon la revendication 2, caractérisé par le fait que le levier d'appui (12) est à deux bras et sollicite le dispositif de mesure de force (13) par l'intermédiaire d'une précontrainte élastique, orientée en sens inverse de la charge exercée par l'anneau de synchronisation (5).

4. Dispositif selon l'une des revendications 1 à 3, caractérisé par le fait qu'au moins deux des butées de montage (10) présentent un dispositif de mesure de force (13).
